# EUROPÄISCHE PATENTSCHRIFT

(11) **EP 4 388 853 B1**
(45) Veröffentlichungstag und Bekanntmachung des Hinweises auf die Patenterteilung: **15.10.2025**
(21) Anmeldenummer: 23216051.5
(22) Anmeldetag: 12.12.2023
(51) Int. Cl.: A01D 34/835

(54) **MULCHEINRICHTUNG UND ERNTEMASCHINE ODER ZUGFAHRZEUG MIT EINER MULCHEINRICHTUNG**
MULCHING DEVICE AND HARVESTING MACHINE OR TOWING VEHICLE WITH A MULCHING DEVICE
DISPOSITIF DE PAILLAGE ET MACHINE DE RÉCOLTE OU VÉHICULE TRACTEUR DOTÉ D'UN DISPOSITIF DE PAILLAGE

(30) Priorität: 21.12.2022 DE 102022004852
(43) Veröffentlichungstag der Anmeldung: 26.06.2024
(73) Patentinhaber: CLAAS Saulgau GmbH, 88348 Bad Saulgau (DE)
(72) Erfinder: Waibel, Jacques, 88339 Bad Waldsee (DE); Fischer, Josef, 88400 Biberach (DE); Wehner, Gregor, 88356 Ostrach (DE)

(56) Entgegenhaltungen:
- EP-B1- 2 853 431
- DE-A1- 102019 128 214
- US-A- 3 529 412
- US-A1- 2004 163 374
- US-A1- 2019 059 196

## Beschreibung

Die Erfindung betrifft eine landwirtschaftliche Erntemaschine oder ein landwirtschaftliches Zugfahrzeug mit einer Mulcheinrichtung.

Eine Mulcheinrichtung dient dem Bearbeiten, nämlich Zerkleinern, von beim Trennen von Erntegut an einem Boden verbleibenden Pflanzenstümpfen bzw. Pflanzenstoppeln. Durch das Zerkleinern der Pflanzenstoppel bzw. Pflanzenstümpfe wird verhindert, dass in den Pflanzenstümpfen bzw. Pflanzenstoppeln Larven von Insekten, wie zum Beispiel des Maiszünslers, überwintern können.

Aus DE 10 2019 128 214 A1 ist eine Mulcheinrichtung, insbesondere zur Montage an einer landwirtschaftlichen Erntemaschine oder einem landwirtschaftlichen Zugfahrzeug bekannt, wobei die Mulcheinrichtung senkrecht zu einer Arbeitsrichtung oder Fortbewegungsrichtung gesehen segmentiert ist und mehrere Mulchersegmente aufweist und die Mulchersegmente gelenkig miteinander verbunden sind, um die Mulchersegmente zur Gewährleistung einer Bodenpassung relativ zueinander zu verkippen.

DE 10 2019 128 215 A1 offenbart eine solche Mulcheinrichtung, die senkrecht zu einer Arbeitsrichtung oder Fortbewegungsrichtung gesehen segmentiert ist und mehrere gelenkig miteinander verbundene Mulchersegmente aufweist. Jedes Mulchersegment weist eine in einem Gehäuse drehbar gelagerte Mulchwalze auf, die um eine horizontale Richtung senkrecht zur Arbeitsrichtung oder Fortbewegungsrichtung verlaufende Drehachse antreibbar ist. Zum Antreiben der Mulchersegmente dient eine Antriebswelle, die über ein Getriebe, wie zum Beispiel einen Riementrieb oder Kettentrieb, eines der Mulchersegmente unmittelbar und über das unmittelbar angetriebene Mulchersegment die anderen Mulchersegmente mittelbar antreibt. Bei aus dem Stand der Technik bekannten Mulcheinrichtungen treibt die Antriebswelle und das Getriebe ein äußeres bzw. seitliches Mulchersegment der Mulcheinrichtung unmittelbar und über dieses unmittelbar angetriebene Mulchersegment die anderen Mulchersegmente mittelbar an. Dabei benötigt eine Antriebslösung, bei welcher die Antriebswelle und das Getriebe ein seitliches bzw. äußeres Mulchersegment unmittelbar antreibt, relativ viel Bauraum. Ferner verdecken dann, wenn die Mulcheinrichtung von einer Arbeitsstellung in eine Transportstellung verlagert wird, die Antriebswelle sowie das Getriebe das Sichtfeld eines Fahrers.

Es besteht Bedarf an einer Mulcheinrichtung, bei welcher der Antrieb weniger Bauraum benötigt und in der Transportstellung der Mulcheinrichtung das Sichtfeld eines Fahrers nicht beeinträchtigt. Ferner besteht Bedarf an einer Erntemaschine sowie an einem Zugfahrzeug mit einer solchen Mulcheinrichtung.

Hiervon ausgehend liegt der vorliegenden Erfindung die Aufgabe zugrunde, eine neuartige landwirtschaftliche Erntemaschine oder ein landwirtschaftliches Zugfahrzeug mit einer Mulcheinrichtung zu schaffen.

Diese Aufgabe wird durch eine Mulcheinrichtung nach Patentanspruch 1 gelöst. Erfindungsgemäß ist das über die Antriebswelle und das Getriebe unmittelbar antreibbare Mulchersegment das mittlere Mulchersegment oder eines der mittleren Mulchersegmente.

Mit der hier vorliegenden Erfindung wird vorgeschlagen, dass das mittlere Mulchersegment oder eines der mittleren Mulchersegmente der Mulcheinrichtung über die Antriebswelle und das Getriebe der Mulcheinrichtung unmittelbar antreibbar ist. Erfindungsgemäß ist demnach vorgesehen, die Antriebswelle und das Getriebe nicht einem äußeren bzw. seitlichen Mulchersegment zum unmittelbaren Antreiben desselben zuzuordnen, sondern vielmehr dem mittleren Mulchersegment oder einem der mittleren Mulchersegmente. Hierdurch ergeben sich Bauraumvorteile. Ferner wird verhindert, dass in der Transportstellung die Antriebswelle und das Getriebe der Mulcheinrichtung ein Sichtfeld eines Fahrers beeinträchtigen.

Vorzugsweise erstreckt sich die Antriebswelle der Mulcheinrichtung, die an die landwirtschaftliche Erntemaschine oder das landwirtschaftliche Zugfahrzeug koppelbar ist, parallel zur Arbeitsrichtung oder Fortbewegungsrichtung. Dies dient der Bereitstellung einer besonders kompakten Bauform der Mulcheinrichtung zum unmittelbaren Antreiben eines mittleren Mulchersegments.

Vorzugsweise ist das Getriebe der Mulcheinrichtung zwischen die Antriebswelle der Mulcheinrichtung und die Mulchwalze des unmittelbar angetriebenen Mulchersegments der Mulcheinrichtung geschaltet. Hierdurch kann das mittlere Mulchersegment bei geringem Bauraumbedarf unmittelbar angetrieben werden. Vorzugsweise weist das Getriebe der Mulcheinrichtung ein Winkelgetriebe und ein Stirnradgetriebe auf, wobei ein Zahnrad des Winkelgetriebes mit der Antriebswelle und ein Zahnrad des Stirnradgetriebes mit der Mulchwalze des unmittelbar angetriebenen Mulchersegments verbunden ist. Dies ist besonders bevorzugt, um bei kompakter Bauform das mittlere Mulchersegment unmittelbar anzutreiben.

Die landwirtschaftliche Erntemaschine oder das landwirtschaftliche Zugfahrzeug weist eine schaltbare Kupplung auf, die vorzugsweise zwischen die Abtriebswelle der Erntemaschine oder des Zugfahrzeugs und eine Welle der Erntemaschine oder des Zugfahrzeugs, von welcher Antriebsleistung für die Mulcheinrichtung abgezweigt wird, geschaltet ist, wobei die schaltbare Kupplung vorzugsweise eine lastschaltbare, insbesondere reibschlüssige, Kupplung ist. Über die schaltbare Kupplung ist es möglich, die Mulcheinrichtung antriebsseitig abzukoppeln und anzukoppeln. Insbesondere dann, wenn die Kupplungseinrichtung eine reibschlüssige Kupplung ist, kann die Mulcheinrichtung beim antriebsseitigen Ankoppeln derselben definiert gestartet und eine Überlastung der Mulcheinrichtung vermieden werden.

Erfindungsgemäß weist die landwirtschaftliche Erntemaschine oder das landwirtschaftliche Zugfahrzeug ein vorzugsweise als Winkelgetriebe ausgebildetes Getriebe auf, welches zwischen die Abtriebswelle der Erntemaschine oder des Zugfahrzeugs und die Welle der Erntemaschine oder des Zugfahrzeugs, von welcher Antriebsleistung für die Mulcheinrichtung abgezweigt wird, geschaltet ist. Hiermit kann gewährleistet werden, dass auch im Bereich des Zugfahrzeugs bzw. der Erntemaschine wenig Bauraum benötigt wird.

Erfindungsgemäß weist die landwirtschaftliche Erntemaschine oder das landwirtschaftliche Zugfahrzeug eine Gelenkwelle auf, die zwischen die Abtriebswelle der Erntemaschine oder des Zugfahrzeugs und die schaltbare Kupplung geschaltet ist, wobei die schaltbare Kupplung vorzugsweise zwischen die Gelenkwelle und das Getriebe geschaltet ist. Über die Gelenkwelle kann eine Relativbewegung zwischen Mulcheinrichtung und Erntemaschine bzw. Zugfahrzeug bei minimalem Bauraumbedarf ausgeglichen werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht einer erfindungsgemäßen Mulcheinrichtung in Arbeitsstellung; und
- Fig. 2: eine schematisierte Darstellung der erfindungsgemäßen Mulcheinrichtung der Fig. 1.

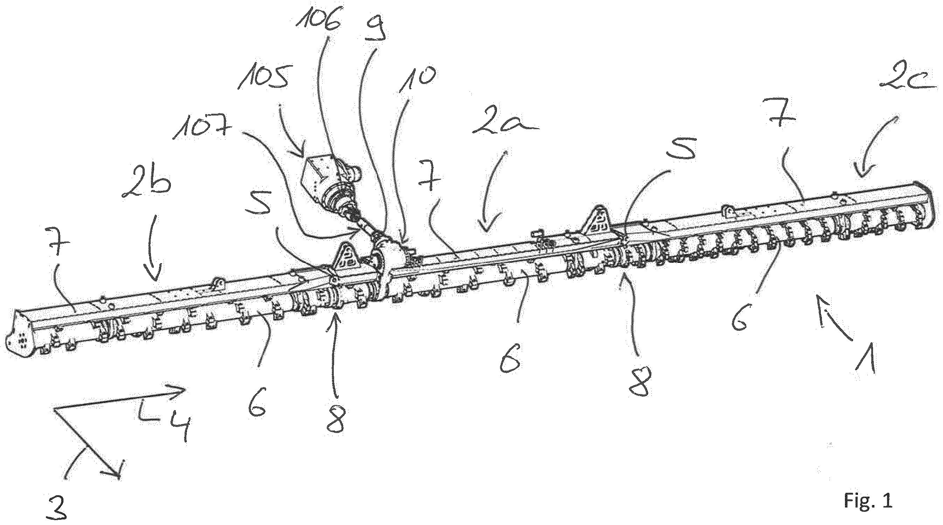

Fig. 1 zeigt eine perspektivische Ansicht einer erfindungsgemäßen Mulcheinrichtung 1, die dem Bearbeiten von Pflanzenstümpfen bzw. Pflanzenstoppeln dient und vorzugsweise an eine landwirtschaftliche Erntemaschine 100 oder an ein landwirtschaftliches Zugfahrzeug gekoppelt ist, um von der Erntemaschine 100 bzw. vom Zugfahrzeug entlang eines zu bearbeitenden Bodens mit zu bearbeitenden Pflanzenstümpfen bzw. Pflanzenstoppeln bewegt zu werden. Durch die Bearbeitung der Pflanzenstümpfe bzw. Pflanzenstoppel wird die Gefahr des Überwinterns von Insektenlarven in den Pflanzenstümpfen bzw. Pflanzenstoppeln reduziert.

Die Mulcheinrichtung 1 ist in einer senkrecht zu einer Arbeitsrichtung oder Fortbewegungsrichtung 3 der Mulcheinrichtung 1 verlaufenden Richtung 4 segmentiert und weist mehrere Mulchersegmente 2a, 2b, 2c auf.

Im gezeigten Ausführungsbeispiel sind drei Mulchersegmente 2a, 2b, 2c vorhanden, wobei das Mulchersegment 2a ein mittleres Mulchersegmente und die beiden Mulchersegmente 2b und 2c seitliche bzw. äußere Mulchersegmente der Mulcheinrichtung 1 bereitstellen. Es können auch mehrere, insbesondere zwei, mittlere Mulchersegmente vorhanden sein.

Die Mulchersegmente 2a, 2b, 2c der Mulcheinrichtung 1 sind gelenkig miteinander verbunden. So sind jeweils benachbarte Mulchersegmente über jeweils eine Gelenkverbindung 5 gelenkig verbunden und so relativ zueinander kippbar, nämlich die beiden Mulchersegmente 2b und 2a über eine Gelenkverbindung 5 und die Mulchersegmente 2a, 2c über eine weitere Gelenkverbindung 5.

Über diese Gelenkverbindungen 5 sind die nebeneinander positionierten Mulchersegmente 2a, 2b, 2c der Mulcheinrichtung 1 zur Gewährleistung einer Bodenanpassung der Mulcheinrichtung 1 an einen zu bearbeitenden Boden relativ zueinander kippbar, um so auch bei einer großen Arbeitsbreite und einem unebenen Boden eine effektive Bearbeitung der Pflanzenstümpfe bzw. Pflanzenstoppel zu gewährleisten. Das oder jedes mittlere Mulchersegment 2a ist feststehend. Die seitlichen Mulchersegmente 2b, 2c sind um die Gelenkverbindungen 5 klappbar.

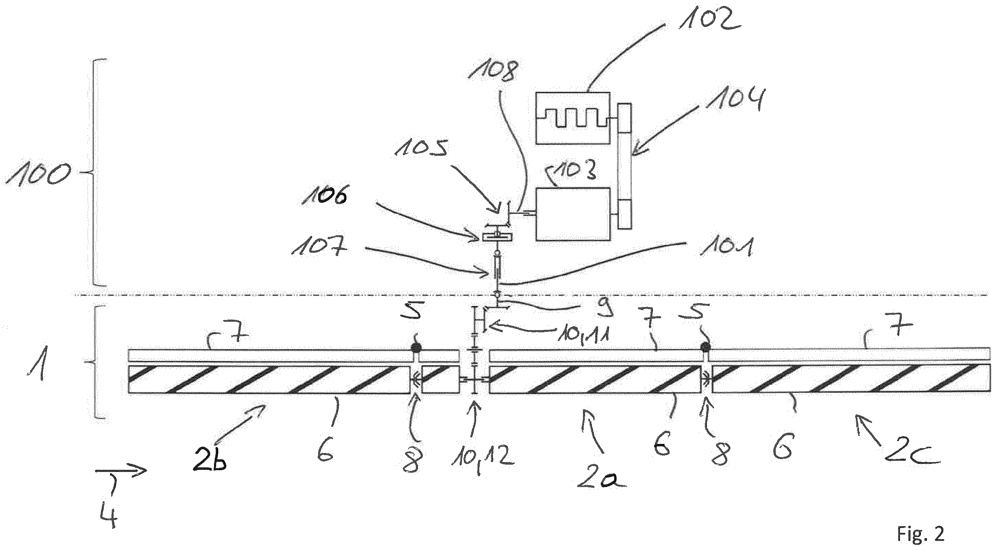

Auch kann die Mulcheinrichtung 1 durch Klappen der Mulchersegmente 2b, 2c um die Gelenkverbindungen 5 zwischen der in Fig. 1 und 2 gezeigten Arbeitsstellung und einer Transportstellung überführt werden.

Die Mulchersegmente 2a, 2b, 2c der Mulcheinrichtung 1 sind nicht nur gelenkig über die Gelenkverbindungen 5 miteinander verbunden, sondern auch über eine Antriebsverbindung miteinander gekoppelt. Jedes der Mulchersegmente 2a, 2b, 2c der Mulcheinrichtung 1 verfügt über eine Mulchwalze 6 und ein Gehäuse 7, wobei die Mulchwalze 6 um eine in horizontaler Richtung senkrecht zur Arbeitsrichtung oder Fortbewegungsrichtung der Mulcheinrichtung 1 verlaufende Drehachse drehbar ist.

Im Gehäuse 7 des jeweiligen Mulchersegments 2a, 2b, 2c ist die Mulchwalze 6 des jeweiligen Mulchersegments 2a, 2b, 2c drehbar gelagert. Die Gehäuse 7 der unmittelbar benachbarten und aneinander angrenzenden Mulchersegmente 2b und 2a, 2a und 2c sind über die Gelenkverbindungen 5 gelenkig miteinander verbunden. Hierdurch sind die Mulchersegmente 2b und 2a, 2a und 2c einerseits miteinander verbunden und andererseits um die Gelenkverbindungen 5 relativ zueinander kippbar.

Ferner sind die Mulchwalzen 6 bzw. die Drehachsen der Mulchwalzen 6 benachbarter und aneinander angrenzender Mulchersegmente gelenkig miteinander verbundener Mulchersegmente 2b und 2a, 2a und 2c über jeweils eine Gelenkwellenkupplung 8 miteinander verbunden, sodass bei der Bodenanpassung trotz einer Kippbewegung der Gehäuse 7 und der Mulchersegmente 2a, 2b und 2c zueinander die Antriebsverbindung zwischen den Mulchersegmenten 2a, 2b und 2c, nämlich zwischen den Mulchwellen 6 derselben, erhalten bleibt.

Dann, wenn ein zu bearbeitender Boden eben ist, sind die Mulchwalzen 6 bzw. die Drehachsen der Mulchwalzen 6 der gelenkig miteinander verbundenen Mulchersegmente 2a, 2b und 2c der Mulcheinrichtung 1 in der Arbeitsstellung koaxial zueinander ausgerichtet. Bei der Bearbeitung eines unebenen Bodens sind die Mulchersegmente 2a, 2b und 2c der Mulcheinrichtung 1 und damit auch die Mulchwalzen 6 und Drehachsen der Mulchwalzen 6 der Mulchersegments 2a, 2b und 2c in der Arbeitsstellung zueinander verkippt.

Eine besonders vorteilhafte Bodenanpassung ist dann möglich, wenn die Drehachse der Mulchwalze 6 jedes Mulchersegments 2a, 2b und 2c eine Kippachse der Gelenkverbindung 5 des jeweiligen Mulchersegments 2a, 2b, 2c zu einem benachbarten Mulchersegment etwa senkrecht schneidet. Die Kippachse der jeweiligen Gelenkverbindung 5 zwischen benachbarten Mulchersegmenten 2a, 2b und 2c verläuft in Arbeitsrichtung bzw. Fortbewegungsrichtung 3.

Wie oben bereits ausgeführt, sind die Mulchwalzen 6 benachbarter Mulchersegmente 2b und 2a, 2a und 2c der Mulcheinrichtung 1 über jeweils eine Gelenkwellenkupplung 8 miteinander verbunden. Hierdurch ist es möglich, bei einer Kippbewegung der benachbarten Mulchersegmente relativ zueinander, nämlich bei einer entsprechenden Kippbewegung der Gehäuse 7 der Mulchersegmente, im Zusammenhang mit einer Bodenanpassung eine Antriebsverbindung zwischen den Mulchwalzen 6 der benachbarten Mulchersegmente aufrechtzuerhalten.

Der Antrieb der Mulchersegmente 2a, 2b, 2c erfolgt über eine Antriebswelle 9 sowie über ein Getriebe 10. Ausgehend von der Erntemaschine 100 bzw. ausgehend vom Zugfahrzeug ist eines der Mulchersegmente über die Antriebswelle 9 und das Getriebe 10 unmittelbar antreibbar, die anderen Mulchersegmente sind über das unmittelbar angetriebene Mulchersegment mittelbar antreibbar. Erfindungsgemäß handelt es sich bei demjenigen Mulchersegment, welches über die Antriebswelle 9 und das Getriebe 10 unmittelbar ausgehend von der Erntemaschine 100 bzw. ausgehend vom Zugfahrzeug antreibbar ist, um das mittlere Mulchersegment 2a bzw. dann, wenn mehrere, insbesondere zwei, mittlere Mulchersegmente vorhanden sind, um eines der mittleren Mulchersegmente.

Die Antriebswelle 9 der Mulcheinrichtung 1 ist an die landwirtschaftliche Erntemaschine 100 bzw. das Zugfahrzeug koppelbar, wobei sich diese Antriebswelle 9 der Mulcheinrichtung 1 parallel zu der durch den Pfeil 3 visualisierten Arbeitsrichtung oder Fortbewegungsrichtung der Mulcheinrichtung 1 bzw. der die Mulcheinrichtung 1 tragenden Erntemaschine 100 erstreckt. Das Getriebe 10 ist zwischen diese Antriebswelle 9 und das unmittelbar angetriebene, mittlere Mulchersegment 2a geschaltet.

Das Getriebe 10 verfügt im gezeigten, bevorzugten Ausführungsbeispiel über ein Winkelgetriebe 11 und ein Stirnradgetriebe 12.

Ein Zahnrad des Winkelgetriebes 11 ist drehfest mit der Antriebswelle 9 gekoppelt und kämmt in ein zweites Zahnrad des Winkelgetriebes 11, welches sich um eine Drehachse dreht, die um 90° versetzt zu der Antriebswelle 9 und damit der Drehachse des mit der Antriebswelle 9 drehfest verbundenen Zahnrads des Winkelgetriebes 11 ist. Dieses Zahnrad des Winkelgetriebes 11, dessen Drehachse um 90° versetzt zur Drehachse der Antriebswelle 9 ist, ist drehfest mit einem Zahnrad des Stirnradgetriebes 12 verbunden, welches über ein weiteres Zahnrad in ein Zahnrad kämmt, das mit der Drehachse der Mulchwalze 8 des mittleren Mulchersegments 2a verbunden ist. Das Getriebe 10 sowie die Antriebswelle 9 der Mulcheinrichtung 1, welche das mittlere Mulchersegment 2a unmittelbar antreiben, benötigen wenig Bauraum und behindern dann, wenn die Mulchersegmente 2a, 2b und 2c aus der in Fig. 1, 2 gezeigten Arbeitsstellung in eine Transportstellung zueinander verschwenkt sind, nicht einen Sichtbereich eines Fahrers.

Die Erfindung betrifft weiterhin die Erntemaschine 100 bzw. ein Zugfahrzeug, mit einer erfindungsgemäßen Mulcheinrichtung 1. Die Antriebswelle 9 der Mulcheinrichtung 1 ist an eine Abtriebswelle 101 der Erntemaschine 100 bzw. des Zugfahrzeugs gekoppelt.

Fig. 2 zeigt Baugruppen einer als Feldhäcksler ausgebildeten Erntemaschine 100, nämlich einen Motor 102 sowie eine Häckseltrommel 103, wobei die Häckseltrommel 103 ausgehend vom Motor 102 über einen Riementrieb oder Kettentrieb 104 antreibbar ist.

Die Antriebsleistung für die Mulcheinrichtung 1 wird in Fig. 2 von der Häckseltrommel 103 abgezweigt, wobei zwischen die Häckseltrommel 103 und die Abtriebswelle 101 ein Getriebe 105, eine als Trennkupplung ausgebildete Kupplung 106 sowie eine Gelenkwelle 107 geschaltet ist.

Bei dem Getriebe 105 handelt es sich um ein Winkelgetriebe, wobei ein erstes Zahnrad des Winkelgetriebes 105 an eine Welle 108 der Häckseltrommel 103 gekoppelt ist. Um 90° versetzt hierzu erstreckt sich eine Drehachse eines zweiten Zahnrads des Winkelgetriebes 105, wobei diese Drehachse vorzugsweise koaxial zur Antriebswelle 9 der Mulcheinrichtung 1 verläuft.

Zwischen das Getriebe 105 der Erntemaschine 100 und die Antriebswelle 9 der Mulcheinrichtung 1 bzw. die Abtriebswelle 101 der Erntemaschine 100 sind die Trennkupplung 106 und die Gelenkwelle 107 geschaltet, wobei die Trennkupplung 106 zwischen die Gelenkwelle 107 und das Getriebe 105 geschaltet ist.

Die schaltbare Trennkupplung 106 ist zwischen die Abtriebswelle 101 der Erntemaschine 100 oder des Zugfahrzeugs und die Welle 108 der Erntemaschine 100 oder des Zugfahrzeugs, von welcher Antriebsleistung für die Mulcheinrichtung 1 abgezweigt wird, geschaltet, wobei es sich in Fig. 1 und 2 bei der Welle 108, von welcher Antriebsleistung für die Mulcheinrichtung 1 abgezweigt wird, um die Welle 108 der der Häckseltrommel 103 handelt.

Bei der Trennkupplung 106 handelt es sich vorzugsweise um eine lastschaltbare, insbesondere um eine reibschlüssige, Trennkupplung 106, wie zum Beispiel um eine Lamellenkupplung. Die Trennkupplung 106 ist schaltbar, kann demnach gezielt geöffnet und geschlossen werden. Dann, wenn es sich bei der Trennkupplung 106 um eine reibschlüssige Trennkupplung 106 handelt, kann dieselbe definiert im Schlupf betrieben werden, um beim Starten der Mulcheinrichtung 1 eine Überlast an derselben zu vermeiden.

Um die Antriebsverbindung zu den Mulchwalzen 6 zu unterbrechen, kann die Trennkupplung 106 alternativ an bzw. zwischen anderen Elementen des Antriebsstrangs der Mulcheinrichtung 1 angeordnet werden. Beispielsweise könnte die Trennkupplung 106 an der Antriebswelle 9 oder an einem Getriebe 10, wie beispielsweise am Winkelgetriebe 11 oder am Stirnradgetriebe 12 angeordnet werden.

Über die Gelenkwelle 107 kann eine Relativbewegung zwischen der Erntemaschine 100 und der Mulcheinrichtung 1 ausgeglichen werden, um trotz einer solchen Relativbewegung eine zuverlässige Antriebsverbindung zwischen der Antriebswelle 9 der Mulcheinrichtung 1 und dem Erntefahrzeug 100 zu gewährleisten.

Mit der Erfindung ist es möglich, eine große Arbeitsbreite für eine Mulcheinrichtung 1 zu gewährleisten, wobei selbst bei einer großen Arbeitsbreite in der Transportstellung der Mulcheinrichtung 1 die Antriebswelle 9 und das Getriebe 10 der Mulcheinrichtung 1 ein Sichtfeld eines Fahrers nicht beeinträchtigen. Über die Antriebswelle 9 und das Getriebe 10 ist ein mittleres Mulchersegment 2a unmittelbar und damit direkt antreibbar, die übrigen Mulchersegmente 2b, 2c werden ausgehend von dem mittleren Mulchersegment 2a mittelbar bzw. indirekt antrieben. Hierdurch ist eine einfache und kompakte Antriebslösung für eine Mulcheinrichtung 1 bereitstellbar, die über ein geringes Gewicht verfügt und in der Transportstellung das Sichtfeld eines Fahrers nicht beeinträchtigt.

### Bezugszeichenliste

- 1: Mulcheinrichtung
- 2a: Mulchersegmente
- 2b: Mulchersegmente
- 2c: Mulchersegmente
- 3: Arbeitsrichtung oder Fortbewegungsrichtung
- 4: Richtung
- 5: Gelenkverbindung
- 6: Mulchwalze
- 7: Gehäuse
- 8: Gelenkwellenkupplung
- 9: Antriebswelle
- 10: Getriebe
- 11: Winkelgetriebe
- 12: Stirnradgetriebe

- 100: Erntemaschine
- 101: Abtriebswelle
- 102: Motor
- 103: Häckseltrommel
- 104: Riementrieb oder Kettentrieb
- 105: Getriebe
- 106: Kupplung
- 107: Gelenkwelle
- 108: Drehachse

## Patentansprüche

1. Landwirtschaftliche Erntemaschine (100) oder landwirtschaftliches Zugfahrzeug, mit einer Abtriebswelle (101) und einer Mulcheinrichtung (1),
wobei die Mulcheinrichtung (1) senkrecht zu einer Arbeitsrichtung oder Fortbewegungsrichtung (3) gesehen segmentiert ist und mehrere gelenkig miteinander verbundene Mulchersegmente (2a, 2b, 2c) aufweist, nämlich mindestens ein mittleres Mulchersegment (2a) und mindestens zwei seitliche Mulchersegmente (2b, 2c),
wobei jedes Mulchersegment (2a, 2b, 2c) eine drehbar gelagerte Mulchwalze (6) aufweist, die um eine in horizontaler Richtung senkrecht zur Arbeitsrichtung oder Fortbewegungsrichtung (3) verlaufende Drehachse drehbar ist,
wobei eines der Mulchersegmente (2a) über eine Antriebswelle (9) und ein Getriebe (10) unmittelbar und die anderen Mulchersegmente (2b, 2c) über das unmittelbar angetriebene Mulchersegment (2a) mittelbar antreibbar sind,
wobei
die Abtriebswelle (101) der Erntemaschine (100) oder des Zugfahrzeugs an die Antriebswelle (9) der Mulcheinrichtung (1) gekoppelt ist, und wobei
eine schaltbare Kupplung (106), zwischen die Abtriebswelle (101) der Erntemaschine (100) oder des Zugfahrzeugs und eine Welle (108) der Erntemaschine (100) oder des Zugfahrzeugs, von welcher Antriebsleistung für die Mulcheinrichtung (1) abgezweigt wird, geschaltet ist, wobei
ein vorzugsweise als Winkelgetriebe ausgebildetes Getriebe (105), zwischen die Abtriebswelle (101) der Erntemaschine (100) oder des Zugfahrzeugs und eine Welle (108) der Erntemaschine (100) oder des Zugfahrzeugs, von welcher Antriebsleistung für die Mulcheinrichtung (1) abgezweigt wird, geschaltet ist und
eine Gelenkwelle (107), zwischen die Abtriebswelle (101) der Erntemaschine oder des Zugfahrzeugs und die schaltbare Kupplung (106) geschaltet ist, **dadurch gekennzeichnet, dass**
die schaltbare Kupplung (106) zwischen die Gelenkwelle (107) und das vorzugsweise als Winkelgetriebe ausgebildete Getriebe (105) geschaltet ist oder im Antriebsstrang der Mulcheinrichtung (1), insbesondere an einer Antriebswelle (9) oder an einem Winkelgetriebe (11) oder an einem Stirnradgetriebe (12) angeordnet ist,
und dass das über die Antriebswelle und das Getriebe unmittelbar antreibbare Mulchersegment das mittlere Mulchersegment oder eines der mittleren Mulchersegmente ist.

2. Landwirtschaftliche Erntemaschine (100) oder landwirtschaftliches Zugfahrzeug nach Anspruch 1, **dadurch gekennzeichnet, dass** die Antriebswelle (9) der Mulcheinrichtung (1) sich parallel zur Arbeitsrichtung oder Fortbewegungsrichtung erstreckt.

3. Landwirtschaftliche Erntemaschine (100) oder landwirtschaftliches Zugfahrzeug nach Anspruch 2, **dadurch gekennzeichnet, dass** das Getriebe (10) zwischen die Antriebswelle (9) und die Mulchwalze (6) des unmittelbar angetriebenen Mulchersegments (2a) geschaltet ist.

4. Landwirtschaftliche Erntemaschine (100) oder landwirtschaftliches Zugfahrzeug nach Anspruch 1, 2 oder 3, **dadurch gekennzeichnet, dass** das Getriebe (10) ein Winkelgetriebe (11) und ein Stirnradgetriebe (12) aufweist, wobei ein Zahnrad des Winkelgetriebes (11) mit der Antriebswelle (9) und ein Zahnrad des Stirnradgetriebes mit der Mulchwalze (6) des unmittelbar angetriebenen Mulchersegments (2a) verbunden ist.

5. Landwirtschaftliche Erntemaschine (100) oder landwirtschaftliches Zugfahrzeug nach Anspruch 1, **dadurch gekennzeichnet, dass** die schaltbare Kupplung (106) eine reibschlüssige Kupplung ist.

## Claims

1. Agricultural harvester (100) or agricultural towing vehicle, with an output shaft (101) and a mulching device (1),
wherein the mulching device (1) is segmented when viewed perpendicularly with respect to a working direction or direction of movement (3) and has a plurality of mulching segments (2a, 2b, 2c) which are connected to one another in an articulated manner, namely at least one central mulcher segment (2a) and at least two lateral mulcher segments (2b, 2c),
wherein each mulcher segment (2a, 2b, 2c) has a rotatably mounted mulching roller (6) which is rotatable about an axis of rotation running in the horizontal direction perpendicularly with respect to the working direction or the direction of movement (3),
wherein one of the mulcher segments (2a) can be driven directly via a drive shaft (9) and a gearbox (10), and the other mulcher segments (2b, 2c) can be driven indirectly via the directly driven mulcher segment (2a), wherein
the output shaft (101) of the harvester (100) or of the towing vehicle is coupled to the drive shaft (9) of the mulching device (1), and wherein
a switchable clutch (106) is connected between the output shaft (101) of the harvester (100) or of the towing vehicle and a shaft (108) of the harvester (100) or of the towing vehicle, from which shaft drive power for the mulching device (1) is branched off, wherein
a gearbox (105), preferably designed as an angular gear, is connected between the output shaft (101) of the harvester (100) or of the towing vehicle and a shaft (108) of the harvester (100) or of the towing vehicle, from which shaft drive power for the mulching device (1) is branched off, and
a propeller shaft (107) is connected between the output shaft (101) of the harvester or of the towing vehicle and the switchable clutch (106), **characterized in that**
the switchable clutch (106) is connected between the propeller shaft (107) and the gearbox (105), preferably designed as an angular gear, or
is arranged in the drive train of the mulching device (1), in particular on a drive shaft (9) or on an angular gear (11) or on a spur gear (12), and **in that** the mulcher segment, which can be driven directly via the drive shaft and the gearbox, is the middle mulcher segment or one of the middle mulcher segments.

2. Agricultural harvester (100) or agricultural towing vehicle according to Claim 1, **characterized in that** the drive shaft (9) of the mulching device (1) extends parallel to the working direction or direction of movement.

3. Agricultural harvester (100) or agricultural towing vehicle according to Claim 2, **characterized in that** the gearbox (10) is connected between the drive shaft (9) and the mulching roller (6) of the directly driven mulcher segment (2a).

4. Agricultural harvester (100) or agricultural towing vehicle according to Claim 1, 2 or 3, **characterized in that** the gearbox (10) has an angular gear (11) and a spur gear (12), wherein a gearwheel of the angular gear (11) is connected to the drive shaft (9) and a gearwheel of the spur gear is connected to the mulching roller (6) of the directly driven mulcher segment (2a).

5. Agricultural harvester (100) or agricultural towing vehicle according to Claim 1, **characterized in that** the switchable clutch (106) is a friction clutch.

## Revendications

1. Machine de récolte agricole (100) ou véhicule tracteur agricole, avec un arbre de sortie (101) et un dispositif de broyage (1),
le dispositif de broyage (1) étant segmenté perpendiculairement à une direction de travail ou une direction de déplacement (3) et présentant plusieurs segments de broyeur (2a, 2b, 2c) reliés entre eux de manière articulée, à savoir au moins un segment de broyeur central (2a) et au moins deux segments de broyeur latéraux (2b, 2c),
chaque segment de broyeur (2a, 2b, 2c) présentant un rouleau de broyage (6) monté de manière rotative, qui peut tourner autour d'un axe de rotation s'étendant dans la direction horizontale perpendiculairement à la direction de travail ou à la direction de déplacement (3),
l'un des segments de broyeur (2a) pouvant être entraîné directement par un arbre d'entraînement (9) et un engrenage (10) et les autres segments de broyeur (2b, 2c) pouvant être entraînés indirectement par le segment de broyeur (2a) entraîné directement,
l'arbre de sortie (101) de la machine de récolte (100) ou du véhicule tracteur étant couplé à l'arbre d'entraînement (9) du dispositif de broyage (1), et
un accouplement commutable (106) étant monté entre l'arbre de sortie (101) de la machine de récolte (100) ou du véhicule tracteur et un arbre (108) de la machine de récolte (100) ou du véhicule tracteur, à partir duquel la puissance d'entraînement est dérivée pour le dispositif de broyage (1),
un engrenage (105), de préférence réalisé sous forme d'engrenage angulaire, étant monté entre l'arbre de sortie (101) de la machine de récolte (100) ou du véhicule tracteur et un arbre (108) de la machine de récolte (100) ou du véhicule tracteur, à partir duquel la puissance d'entraînement est dérivée pour le dispositif de broyage (1), et
un arbre articulé (107) étant monté entre l'arbre de sortie (101) de la machine de récolte ou du véhicule tracteur et l'accouplement commutable (106), caractérisé(e) en ce que
l'accouplement commutable (106) est monté entre l'arbre d'entraînement (107) et l'engrenage (105) de préférence réalisé sous forme d'engrenage angulaire, ou
est agencé dans la chaîne cinématique du dispositif de broyage (1), notamment sur un arbre d'entraînement (9) ou sur un engrenage angulaire (11) ou sur un engrenage droit (12), et en ce que le segment de broyeur pouvant être entraîné directement par l'arbre d'entraînement et l'engrenage est le segment de broyeur central ou l'un des segments de broyeur centraux.

2. Machine de récolte agricole (100) ou véhicule tracteur agricole selon la revendication 1, caractérisé(e) en ce que l'arbre d'entraînement (9) du dispositif de broyage (1) s'étend parallèlement à la direction de travail ou à la direction de déplacement.

3. Machine de récolte agricole (100) ou véhicule tracteur agricole selon la revendication 2, caractérisé(e) en ce que l'engrenage (10) est monté entre l'arbre d'entraînement (9) et le rouleau de broyage (6) du segment de broyeur (2a) entraîné directement.

4. Machine de récolte agricole (100) ou véhicule tracteur agricole selon les revendications 1, 2 ou 3, caractérisé(e) en ce que l'engrenage (10) présente un engrenage angulaire (11) et un engrenage droit (12), une roue dentée de l'engrenage angulaire (11) étant reliée à l'arbre d'entraînement (9) et une roue dentée de l'engrenage droit étant reliée au rouleau de broyage (6) du segment de broyeur (2a) entraîné directement.

5. Machine de récolte agricole (100) ou véhicule tracteur agricole selon la revendication 1, caractérisé(e) en ce que l'accouplement commutable (106) est un accouplement à friction.
